# EUROPEAN PATENT APPLICATION

(11) **EP 3 708 982 A1**
(43) Date of publication of application: **16.09.2020**
(21) Application number: 17931611.2
(22) Date of filing: 07.11.2017
(51) Int. Cl.: G01K 11/06

(54) **COMPOSITE TEMPERATURE INDICATION ARTICLE AND PREPARATION METHOD AND USE THEREOF**

(71) Applicant: 3M Innovative Properties Company, St. Paul, MN 55133-3427 (US)
(72) Inventor: LI, Cheng, Shanghai 200233 (CN); GONG, Guangming, Shanghai 200233 (CN); SHI, Ying, Shanghai 200233 (CN); JIN, Zhou, Shanghai 200233 (CN); GUAN, Zheng, Shanghai 200233 (CN)
(74) Representative: Mathys & Squire
(86) International application number: PCT/CN2017/109717
(87) International publication number: WO 2019/090472

(57) **Abstract**

Disclosed is a temperature-indicating composite material product and a manufacturing method and application thereof, the temperature-indicating composite material product comprising: a porous film (1), opaque to at least a portion of visible light or opaque to at least a portion of visible light and at least a portion of ultraviolet light; and a colored composite material layer (2) located at the lower surface of the porous film (1), wherein the colored composite material layer (2) comprises a macro-molecular connecting material, a crystalline material and a colorant. Preferably, the macro-molecular connecting material is a crosslinked pressure-sensitive adhesive material, wherein the crystalline material and the colorant are dispersed in the macro-molecular connecting material, and the macro-molecular connecting material is an amorphous material or has a melting point higher than that of the crystalline material. When heated and melted, the crystalline material may migrate into the porous film (1) and fill pores therein, making the porous film (1) transparent to visible light.

## Description

### TECHNICAL FIELD

The present disclosure relates to a temperature-indicating composite material product, and especially to a thermochromic material product (such as a thermochromic label and a thermochromic adhesive tape) used in the electric power field.

### BACKGROUND

The method of temperature detection is taken very seriously in the industrial fields, as it is often related to whether an object to be detected is operating normally or within a safety range. For example, in the electric power industry, if the temperature of the cable connector and the strain clamper has exceeded a certain value, it means abnormally high power is passing through the cable, which is easy to result in operation safety problems, and inspection or maintenance needs to be carried out.

One temperature monitoring method often used is to utilize a material that can generate solid-liquid phase changes at a certain temperature. When the phase change occurs, this material will experience a change in opacity or will exert influence on the ambient environment or materials, thereby serving a role of temperature indication. In Patent Application EP1281946, paraffin is made into a regular pattern. When the temperature rises above the melting point of paraffin, the pattern is destroyed, thereby serving a role of temperature indication. Another example is Patent Application CN1174987, in which a paper layer with wax attached thereon is hidden under another wax permeable layer exerting a shielding effect. The wax adopted in that invention was colored in advance. In the normal state, the color of the wax permeable layer, generally white, is seen. When the temperature rises above the melting point of wax, the colored wax becomes liquid and permeates into the porous permeable layer of an upper layer to make it colored. As a result, the color of the colored wax will be observed and serve as a warning. This invention has not taken weather-resistance into consideration in its design, e.g., it has not been indicated in this invention whether color wax that has experienced the color change can withstand the radiation of the UV light and maintain its warning color after being exposed in the open air for a long period of time. In addition, when the invention is used outdoor, if water permeates into the paper permeating layer, the permeating layer will become transparent, thereby lowering the accuracy of temperature indication. Moreover, that invention requires an additional pressure-sensitive adhesive layer to play a role of adhering to the surface to be tested.

In another Patent Application US20060011124A1, a formulation with paraffin powder as the main ingredient is coated on an upper layer of the paper with a warning color. Because of the shielding effect produced by the light-scattering caused by the paraffin powder, the color of the paper cannot be observed. When the temperature rises to the melting temperature of paraffin, paraffin will become liquid and be absorbed by the lower layer paper, and the color of the paper will be exposed, thereby to achieve the purpose of temperature indication. When the temperature drops below the melting point of paraffin, the color of the warning will remain because the paraffin will not change back into powder and shield the color. In that invention, water permeation is prevented through placing a hydrophobic paraffin layer as the top layer, thereby to solve the problem of discoloration caused by water. However, the invention still takes no account of outdoor use, and still requires an additional pressure-sensitive adhesive layer to provide the adhesive property to bond to the surface to be tested.

Patent US4428321 has designed a time-temperature indicator label of a three-layer structure. The top layer is a transparent blend coating containing rubber and a crystallizable material. At a certain temperature, this coating has fluidity. The middle layer is a shielding layer of a porous film layer, which is used to shield the color of the bottom layer. The bottom layer is a colored layer. When a certain temperature is reached, the material of the top layer begins to have fluidity, and penetrates into the porous shielding layer, making the shielding layer transparent, thereby revealing the color of the bottom layer and exerting the indication effect. The physical action of the top layer material penetrating into the porous shielding layer is not only related to temperature, but also to time. Thus, even if color development is observed, it is impossible to determine the temperature which the label has been exposed to.

### SUMMARY

The present disclosure provides a temperature-indicating composite material product and a manufacturing method and application thereof. Whether the surface temperature of the object exceeds the given temperature can be detected by the temperature-indicating composite material product through discoloration. The product has excellent weather resistance and high intrinsic viscosity, and can be directly stuck to or wound on the surface of the detected object. No such combination of the construct and the feature has been found among similar existing products to date. Existing products in the art do not perform well in outdoor conditions, and may require a more expensive pressure-sensitive adhesive.

Some aspects of the present disclosure provide a temperature-indicating composite material product, comprising:
a porous film, opaque to at least a portion of visible light, or opaque to at least a portion of visible light and at least a portion of ultraviolet light;
a colored composite material layer located at a lower surface of the porous film, the colored composite material layer comprising:
   a macro-molecular connecting material;
   a crystalline material; and
   a colorant, wherein
the crystalline material and the colorant are dispersed in the macro-molecular connecting material, the macro-molecular connecting material is an amorphous material or has a melting point higher than that of the crystalline material, and when the crystalline material is heated to melt into a liquid, the macro-molecular connecting material and the crystalline material are phase-separated so that when heated to melt into a liquid, the crystalline material can migrate into the porous film, and fill a plurality of pores therein, making the porous film transparent to visible light.

Some aspects of the present disclosure provide a method for manufacturing the above temperature-indicating composite material product, comprising:
mixing uniformly a slurry containing a macro-molecular connecting material, a crystalline material and a colorant, and then drying to form a colored composite material layer; and
laminating the obtained colored composite material onto a porous film opaque to at least a portion of visible light, or opaque to at least a portion of visible light and at least a portion of ultraviolet light, wherein
the macro-molecular connecting material is an amorphous material or has a melting point higher than that of the crystalline material, and when the crystalline material is heated to melt into a liquid, the macro-molecular connecting material and the crystalline material are phase-separated so that when heated to melt into a liquid, the crystalline material can migrate into the porous film, and fill a plurality of pores therein, making the porous film transparent to visible light.

Some aspects of the present disclosure provide application of the above temperature-indicating composite material product as a thermochromic label or a thermochromic adhesive tape in electric power or original equipment manufacturing.

The temperature-indicating composite material product provided according to the present disclosure has at least one of the following advantages:
1. the product has a simple structure and is easy to produce;
2. the product has excellent weather resistance and is suitable for long-term outdoor use;
3. the product can be stuck (even directly as a pressure-sensitive adhesive tape) to the surface of the detected object, so the use thereof is quite simple and convenient; and
4. the product is soft and flexible, and thus can be stuck tightly to a surface of the object measured (especially on a complex surface).

### BRIEF DESCRIPTION OF THE DRAWINGS

In order to make the above and other objectives, features and advantages of the present disclosure more apparent and easier to understand, the present disclosure will be further explained below in combination with the accompanying drawing and particular embodiments.

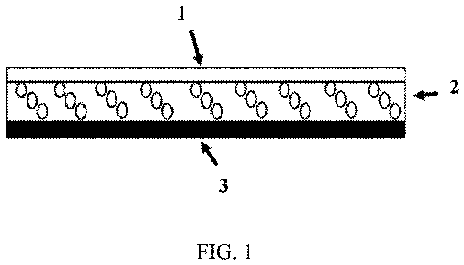

FIG. 1 is a schematic diagram of a temperature-indicating multilayer composite structure provided according to one embodiment of the present disclosure.

### DETAILED DESCRIPTION

It should be appreciated that a person skilled in the art can devise various other implementation schemes based on the teachings of this Description and modify these without departing from the scope or spirit of the present disclosure. Therefore, the following particular embodiments have no limiting meaning.

Unless otherwise specified, all numbers used in this Description and the Claims representing the characteristic sizes and quantities and physical properties should be understood as being modified by the term "approximately" under any and all circumstances. Therefore, unless stated on the contrary, parameters in numerical values listed in the above description and in the attached claims are all approximate values, and those of skill in the art are capable of seeking to obtain desired properties by taking advantage of contents of the teachings disclosed herein, and changing these approximate values appropriately. The use of a numerical range represented by end points includes all numbers within such range and any range within the range. For example, 1 to 5 includes 1, 1.1, 1.3, 1.5, 2, 2.75, 3, 3.80, 4, and 5, etc.

Unless otherwise specified, the "crystalline material" used in this specification and claims means a material with a definite melting point or melting range.

Unless otherwise specified, the "colorant" used in this specification and claims is a generic term of pigments and dyes.

### Temperature-Indicating Composite Material Product

According to some aspects, the present disclosure provides a temperature-indicating composite material product, comprising: a porous film; and a colored composite material layer located at a lower surface of the porous film. In practice, a release film may be provided on the side of the colored composite material layer opposite to the porous film, as required.

Moreover, the temperature-indicating composite material product provided in the present disclosure may further comprise a UV-resistant transparent protective film located at the upper surface of the porous film, as required.

In the present disclosure, the term "lower surface of the porous film" refers to the unexposed surface (the surface contacting the colored composite material layer) of the porous film, and the term "upper surface of the porous film" refers to the surface opposite to the "lower surface of the porous film" which is an exposed surface (i.e., the surface contacting the ambient environment), or the surface covered by the transparent protective film.

The porous film in the temperature-indicating composite material product provided in the present disclosure is preferably a hydrophobic film, and opaque to at least a portion of visible light or opaque to at least a portion of visible light and at least a portion of ultraviolet light, thereby to play the roles of resisting weather and shielding the color of the lower layer. More preferably, the porous film is opaque to all visible light.

According to certain particular embodiments, the porous film has a pore size equivalent to the wavelength of the light to be scattered, such as an average pore size of 80 to 800 nm, for the purpose of scattering light. The average pore size of the porous film may also be 100 to 800 nm, or 200 to 800 nm.

According to certain particular embodiments, the thickness of the porous film ranges from 1 µm to 500 µm. With a thickness within this range, the porous film can fully function to scatter light and resist weather. Moreover, when the crystalline material is heated and melted, the liquid material formed thereby is allowed to fully penetrate, and fill a plurality of pores in the porous film, so as to transparentize the porous film. In certain particular embodiments, the thickness of the porous film may range from 30 µm to 500 µm.

According to certain particular embodiments, the porous film comprises a hydrophobic polymer material, e.g., polyolefin, polystyrene, polyacrylate, fluorocarbon macro-molecules, polyethersulfone, or copolymerized polymers containing the above polymers. More particular examples of the hydrophobic polymer material may include polyethylene, polypropylene, polystyrene, polyvinylidene fluoride, polytetrafluoroethylene, polyethersulfone and the like.

According to certain particular embodiments, the porous film comprises a weather-resistant material, such as polyvinylidene fluoride, etc. Porous films manufactured with other materials, e.g., other materials with an additive such as a UV-absorber and a UV-stabilizer added, can also be used.

According to certain particular embodiments, in order to further ensure the weather resistance, a layer of a protective film acting to shield the ultraviolet light may be attached on the porous film. As for the material which can be used for the UV-resistant transparent protective film, the following can be enumerated: polyacrylate, polyurethane, polyethylene-vinyl acetate, polyvinyl chloride, polyolefin, organosilicon, polyester (e.g., polyethylene terephthalate), etc.

The colored composite material layer in the temperature-indicating composite material product provided in the present disclosure comprises: a macro-molecular connecting material; a crystalline material; and a colorant, wherein the crystalline material and the colorant are dispersed in the macro-molecular connecting material, the macro-molecular connecting material is an amorphous material or has a melting point higher than that of the crystalline material, and when the crystalline material is heated to melt into a liquid, the macro-molecular connecting material and the crystalline material are phase-separated.

According to certain particular embodiments, the thickness of the colored composite material layer ranges from 1 µm to 500 µm. The colored composite material layer can have a sufficient adhesion with a thickness in such a range, and a sufficient amount of liquid formed when the crystalline material is heated and melts can be allowed to permeate into the porous film to transparentize the porous film. In certain particular embodiments, the thickness of the colored composite material layer may range from 1 µm to 500 µm.

According to certain particular embodiments, the crystalline material in the colored composite material layer has one definite melting point or melting range. Below the temperature of the melting point, the crystalline material remains as a solid, and above the temperature of the melting point, it melts into a liquid and can penetrate into the porous film, and fill a plurality of pores therein, making the porous film transparent. In order to achieve a sufficient transparentizing effect, preferably the liquid formed after the melting of the crystalline material has a refractive index close to that of the solid material constituting the porous film. The melting point or melting range of the crystalline material can be determined according to the warning temperature of the object to be measured.

According to certain particular embodiments, the crystalline material may be a macro-molecular or small molecular material. For example, the crystalline material may be low-molecular weight polyethylene, or other molecules with crystalline properties, including various natural waxes and synthetic waxes, synthetic polymers and the like, can also be used.

According to certain particular embodiments, the crystalline material includes stearic acid, lauric acid, linear polyethylene, docosanoic acid, stearone, carnauba wax, microcrystalline wax, paraffin, polyethylene wax, candlelight wax, lignite wax, Fischer-Tropsch synthetic wax, bisamide wax, amide wax, hydrogenated castor oil, synthetic ester wax, oxidized polyethylene wax, oleamide, stearamide, lauramide, erucyl amide, glycerol ester, chlorinated wax, carbamate modified wax, and other synthetic and natural waxes.

According to certain particular embodiments, the particle size of the crystalline material ranges from 0.1 µm to 500 µm. With the particle size within this range, the crystalline material can be uniformly dispersed in the colored composite material layer, and the liquid formed when it melts can easily penetrate into the porous film. According to certain particular embodiments, the particle size of the crystalline material may range from 0.5 µm to 500 µm.

According to certain particular embodiments, the macro-molecular connecting material in the colored composite material layer is used to secure the solid crystalline material and the colorant in the colored composite material layer, thereby to maintain stability of the structure. The macro-molecular connecting material is an amorphous material or has a melting point higher than that of the crystalline material, and when the crystalline material is heated to melt into a liquid, the macro-molecular connecting material and the crystalline material are phase-separated so that the liquid formed by melting the crystalline material can migrate into the porous film, and fill a plurality of pores therein, making the porous film transparent to visible light. Although non-pressure-sensitive adhesive material such as epoxy resin, phenol formaldehyde resin, acrylate, polyamide, polyurethane, polyolefin copolymer, cellulose, natural rubber, neoprene, butyronitrile rubber, polysulfide rubber, silicone rubber, chloro rubber and the like can be adopted for the macro-molecular connecting material, the macro-molecular connecting material is preferably a pressure-sensitive adhesive material, such as polyacrylate, silica gel, polyurethane, polyester, polyolefin, ethylene-ethylene acetate, polybutyronitrile, styrene block polymer, rubber pressure-sensitive adhesive, etc. No matter if the macro-molecular connecting material is a pressure-sensitive adhesive material or a non-pressure-sensitive adhesive material, common requirements for them are the following: they do not react with molecules of the crystalline material; when the crystalline material melts into a liquid, the macro-molecular connecting material and the liquid formed by the crystalline material are phase-separated; and they do not penetrate into the porous film before the melting of the crystalline material to make it transparent to visible light. When the macro-molecular connecting material is a pressure-sensitive adhesive material, the pressure-sensitive adhesive material can also play the role of an adhesive, e.g., by bonding the porous film to the colored composite material layer. Moreover, the pressure-sensitive adhesive material is preferably a crosslinked pressure-sensitive adhesive material, because it forms a macromolecular network such that molecules of the pressure-sensitive adhesive are difficult to penetrate into the porous film and fill a plurality of pores therein, thereby to prevent the porous film from becoming transparent to visible light due to the pressure-sensitive adhesive material.

According to certain particular embodiments, in order to ensure that the liquid formed after the melting of the crystalline material can smoothly penetrate into the porous membrane, when the aforementioned macro-molecular connecting material is a crosslinked pressure-sensitive adhesive material, it is preferred that the compatibility between the pressure-sensitive adhesive material and the crystalline material is poor, for example, the pressure-sensitive adhesive material does not have a group that can react with the crystalline material.

According to certain particular embodiments, when the aforementioned macro-molecular connecting material is a pressure-sensitive adhesive material, the mass of the crystalline material ranges from 1 to 300 parts, based on 100 parts by mass of the pressure-sensitive adhesive material. Within this proportion range, sufficient amount of liquid formed by the crystalline material can be ensured to penetrate into the porous film and fill in a plurality of pores thereof, so that the porous film becomes transparent to visible light and at the same time, it can be ensured that the colored composite material layer has sufficient adhesion to be able to adhere. In certain particular embodiments, when the aforementioned macro-molecular connecting material is a pressure-sensitive adhesive material, the mass of the crystalline material may range from 1 to 100 parts, based on 100 parts by mass of the pressure-sensitive adhesive material.

According to certain particular embodiments, when the aforementioned macro-molecular connecting material is a pressure-sensitive adhesive material, the pressure-sensitive adhesive material includes a radiation-curable pressure-sensitive adhesive, for example, a UV-curable pressure-sensitive adhesive, e.g., a UV-curable polyacrylate pressure-sensitive adhesive. Under this circumstance, the colored composite material layer may contain no crosslinker.

According to certain particular embodiments, when the aforementioned macro-molecular connecting material is a pressure-sensitive adhesive material, a crosslinker may be added into the pressure-sensitive adhesive material, and the crosslinker is selected in accordance with the pressure-sensitive adhesive material used, and the crosslinker is used in an amount ranging from 0.01 to 1 part by mass, based on 100 parts by mass of the pressure-sensitive adhesive material. In certain particular embodiments, the crosslinker may be used in an amount ranging from 0.1 to 1 part by mass.

According to certain particular embodiments, the colorant in the colored composite material layer can be uniformly dispersed in this colored composite layer. After the porous film becomes transparent to visible light, the color of this layer can be seen and thereby exerts the indication effect.

According to certain particular embodiments, when the aforementioned macro-molecular connecting material is a pressure-sensitive adhesive material, the colorant is used in an amount ranging from 1 to 20 parts by mass, based on 100 parts by mass of the pressure-sensitive adhesive material. Within this content range, the colorant can fully exert the coloration effect, and can prevent drops in the dispersibility and viscosity. In certain particular embodiments, the colorant may be used in an amount ranging from 2 to 20 parts by mass.

According to certain particular embodiments, the colorant in the colored composite material layer may include a pigment and a dye, and preferably a pigment.

According to certain particular embodiments, in consideration of better weather resistance, the pigment is preferably an inorganic pigment.

According to certain particular embodiments, in order to further improve the performance, the colored composite material layer may further comprise other additives, including antioxidants, UV-absorbers, UV aging-resistant additives, and the like.

The temperature-indicating composite material product provided in the present disclosure may further comprise a release film which is located at one side of the colored composite material layer opposite to the porous film and serves as a protection for the viscosity of the colored composite material layer.

According to certain particular embodiments, the upper surface of the porous film can be used as a low-viscosity back base. In this case, after a layer of low-surface-energy coating (e.g., a chlorocarbon-based macro-molecular material, such as polytetrafluoroethylene, polyvinylidene fluoride, chloroplastic macro-molecular materials, etc., or an organosilicon release agent, etc.) is coated on the porous film, the product can be rolled up directly without the use of a release film.

FIG. 1 shows a schematic diagram of a temperature-indicating composite material product provided according to one embodiment of the present disclosure, wherein the temperature-indicating composite material product shown has a structure of a porous film 1, a colored composite material layer 2 and a release film 3 laminated in sequence. The colored composite material layer 2 comprises a crosslinked pressure-sensitive adhesive material, a crystalline material and a colorant. FIG. 1 only schematically shows the distribution of the crystalline material in the colored composite material layer 2. It should be noted that the release film 3 is not necessary for the temperature-indicating composite material product.

### Method For Manufacturing The Temperature-Indicating Composite Material Product

According to some aspects, the present disclosure provides a method for manufacturing the above temperature-indicating composite material product, the method comprising: mixing uniformly a slurry containing a macro-molecular connecting material, a crystalline material and a colorant, then drying to form a colored composite material layer; laminating the obtained colored composite material to the porous film; and optionally, attaching a UV-resistant transparent protective film onto the porous film. When the macro-molecular connecting material is a pressure-sensitive adhesive material, the above method comprises steps of: mixing uniformly a slurry containing a pressure-sensitive adhesive material, a crystalline material, a colorant, and optionally a crosslinker, then drying and crosslinking the pressure-sensitive adhesive material, so as to form a colored composite material layer; laminating the obtained colored composite material onto the porous film; and optionally, attaching a UV-resistant transparent protective film on the porous film.

Regarding the description of "porous film," "colored composite material layer," "UV-resistant transparent protective film" and "release film," as well as "pressure-sensitive adhesive material," "crystalline material," "colorant" and "crosslinker," reference is made to the section "Temperature-Indicating Composite Material Product" in this specification.

According to certain particular embodiments, the slurry can be formed by diluting a pressure-sensitive adhesive material as the macro-molecular connecting material, a crystalline material, a colorant and optionally a crosslinker with a solvent, and then mixing uniformly.

According to certain particular embodiments, the solvent for dilution may include ethyl acetate, n-propyl acetate, butyl acetate, toluene, xylene, isopropanol and the like.

According to certain particular embodiments, when the macro-molecular connecting material is a pressure-sensitive adhesive material, the pressure-sensitive adhesive material can be crosslinked at a heating condition.

According to certain particular embodiments, when the macro-molecular connecting material is a pressure-sensitive adhesive material, the pressure-sensitive adhesive material can be crosslinked through radiation, e.g., ultraviolet irradiation.

According to certain particular embodiments, the colored composite material layer is laminated with the porous film at a temperature lower than the melting point of the crystalline material.

### Application Of The Temperature-Indicating Composite Material Product

According to certain aspects, the present disclosure provides application of the above temperature-indicating composite material product in electric power or original equipment manufacturing. After the temperature reaches the melting point of the crystalline material, as the crystalline material melts to form a liquid and flows into the porous film and fills the pores therein, the porous film of the upper layer will become transparent to the visible light, showing the color of the colored composite material layer, thus indicating whether there is overheating.

According to certain particular embodiments, the temperature-indicating composite material product is used as a thermochromic label or a thermochromic adhesive tape.

When the temperature-indicating composite material product is used as a thermochromic label or a thermochromic adhesive tape, there may be several situations as follows:
1) if the colored composite material layer itself has viscosity (e.g., when the macro-molecular connecting material is a pressure-sensitive adhesive material), the thermochromic label or the thermochromic adhesive tape can be stuck to or wound on the object surface through the colored composite material layer thereof;
2) alternatively, whether or not the colored composite material layer has viscosity, an adhesive layer, such as a pressure-sensitive adhesive layer, may be provided on the surface of the colored composite material layer opposite to the porous film, and the thermochromic label or the thermochromic adhesive tape may be stuck to or wound on the object surface through the adhesive layer; and
3) or alternatively, a substrate layer may be provided on the surface of the colored composite material layer opposite to the porous film, and an adhesive layer, such as a pressure-sensitive adhesive layer, may be provided on the surface of the substrate layer opposite to the colored composite material layer, and the thermochromic label or the thermochromic adhesive tape may be stuck to or wound on the object surface through the adhesive layer.

According to certain particular embodiments, the thermochromic label or the thermochromic adhesive tape is stuck to or wound on the surface of the object measured.

According to certain particular embodiments, the object measured includes a cable connector and clamp.

### Embodiments

The embodiments provided hereinafter facilitate understanding of the present invention, and should not be understood as limiting the scope of the present invention. Unless otherwise indicated, all parts and percentages used herein are by weight.

Information about certain raw materials for manufacturing the temperature-indicating composite material products in embodiments and comparative embodiments of the present disclosure are listed in Table 1 below.

**Table 1**

| Material Brand | Chemical name | Material description |
|---|---|---|
| POLYWAX™ M80 | Polyethylene wax (Polyethylenes) | 80° melting point, particles, Baker Hughes Inc. |
| CSA 3020 | Polyacrylate | Pressure-sensitive adhesive, 42 mass% dissolved in ethyl acetate, 3M |
| RD1054 | Bisamide | 5 mass% in toluene, 3020 pressure-sensitive adhesive crosslinker, 3M |
| ES 6020 | Polyvinylidene fluoride (PVDF) film | Porous film, 3M. |
| Red pigment | Ferric oxide | Slurry, ColorSun Group |
| Ethyl acetate | EA, CAS: 141-78-6 | Chemically pure, Sinopharm Group |
| Dimethyl formamide | DMF, CAS: 68-12-2 | Chemically pure, Sinopharm Group |
| MPF WH-J | Polypropylene film | Porous film, coiled material, 3M |
| AsahiKASEI AS030; AsahiKASEI AS090; AsahiKASEI Regular A1290 | Polypropylene | Commercially available nonwoven fabric, Asahi Kasei Inc. |

### Embodiment 2. Selection Of Porous Material

A number of purchased samples of nonwoven fabrics and films manufactured by 3M were compared and screened. Method: the film sample to be screened was cut into 3 cm × 8 cm rectangle samples, and 0.5 g of M80 wax powder was uniformly spread on the surface of the sample to be screened. The sample was placed in an oven at 80°C and stood still for half an hour. Then the sample was taken out and cooled to room temperature, and compared with the original sample. Results are shown in Table 2.

**Table 2**

| Sample | Transparency state of the original sample | Heating at 80°C | After cooling |
|---|---|---|---|
| AsahiKASEI AS030; | White semitransparent | Transparent | Transparent |
| AsahiKASEI AS090; | White semitransparent | Transparent | White semitransparent |
| AsahiKASEI Regular A1290 | White, opaque | Semitransparent | White |
| ES6020 film | White opaque | Transparent | Transparent |
| MPF WH-J | White opaque | Transparent | Transparent |

AS030, AS090 and A1290 were commercially available spunbond nonwoven fabrics. The fiber coarseness of the spunbond nonwoven fabrics was generally from a few microns to a few tens of microns. It is clear from the results shown in Table 2 that, after wax contact, the transparency of AS030 and AS090 after heating and cooling was acceptable; however, the shielding performance of the original sample with respect to visible light was not good. The transparency of A1290 after heating and cooling was not good. None of the above materials was suitable as the porous material of the present invention. The ES6020 film and the MPF WH-J film produced by 3M changed from opaque to transparent after the wax powder melted, and maintained good transparency after cooling, and thus they are suitable as the porous material of the present invention.

### Embodiment 3. Manufacturing Of The Colored Composite Material Layer And Manufacturing Of The Temperature-Indicating Multilayer Composite Structure (Thermochromic Adhesive Tape)

The M80 wax powder was screened through 100-mesh and 60-mesh sieves, so as to separate out wax powders of particles of different sizes. The weighed 3020 pressure-sensitive adhesive, RD1054 crosslinker, M80 wax powder and a red pigment were added into a plastic bottle, diluted with ethyl acetate to a 30 wt% slurry, mixed for half an hour on a three-roll machine, then placed into a planetary mixer and mixed uniformly. The slurry was coated on a 50-µm PET release film (Loparex Paper Inc., release force 5 g/inch) by the comma roll coating method. The gap distance was controlled at 300 µm. After coating, the sample was kept in a 60° oven for 5 min, and then kept in a 105° oven for 10 min, for crosslinking. 3M MPF WH-J was attached to the sample obtained, and the composite material layer was transferred to the porous layer (at a hot pressing temperature of 65 °C) with a hot pressing roller through heat sticking, thereby forming a temperature-indicating adhesive tape sample to be tested.

The sample above was placed into a 80 °C oven, observed for the color development, and recorded for the color development state and time. The following Table 3 shows results when 3M MPF WH-J was used as a porous layer. When the ES6020 PVDF film was used, similar results would be produced under the same formulation.

**Table 3. Composition of main ingredients and color development test results of the thermochromic adhesive tape (the parts in the table are given by weight of the solid content)**

| Code | 3020 | RD1054 | M80 60-mesh | M80 100-mesh | Pigment | Discoloration time and status at 80°C |
|---|---|---|---|---|---|---|
| CE-1 | 100 parts | 0 part | 0 part | 0 part | 4 parts | Uniform color development occurred at 5 days. |
| CE-2 | 100 parts | 0.12 part | 0 part | 0 part | 4 parts | No change in half a year |
| A | 100 parts | 0.12 part | 10 parts | 0 part | 4 parts | Nonuniform color development occurred after 15 min; the color development area was very small. It did not turn uniform after a long standing time. |
| B | 100 parts | 0.12 part | 20 parts | 0 part | 4 parts | Nonuniform color development occurred after 15 min; it turned uniform after a long standing time, but the color development was incomplete. |
| C | 100 parts | 0.12 part | 30 parts | 0 part | 4 parts | Uniform and complete color development occurred at 15 min. |
| D | 100 parts | 0.12 part | 0 part | 30 parts | 4 parts | Nonuniform color development occurred at 15 min. |
| E | 100 parts | 0.12 part | 0 part | 50 parts | 4 parts | Uniform color development occurred at 15 min. |

It can be seen from the results shown in Table 3 that, in the absence of a crosslinker, the color development of the thermochromic adhesive tape may be caused by penetration of the uncrosslinked pressure-sensitive adhesive into the light scattering layer. This problem could be solved by adding a small amount of a crosslinker. When the part of wax was less than 30, the color development was nonuniform. This problem could be solved by increasing the portion of wax. Also, the selection of wax powder of larger particles could provide faster color development.

### Embodiment 4. Peeling Adhesion Force Test (ASTM D 3330/D 3330M-04)

The M80 wax powder was screened through 100-mesh and 60-mesh sieves, so as to separate out wax powders of particles of different sizes. The weighed 3020 (100 parts), RD1054 (0.12 part), M80 (50 parts) and a red pigment (4 parts) were added into a plastic bottle, diluted with ethyl acetate to a 30 wt% slurry, mixed for half an hour on a three-roll machine, then placed into a planetary mixer and mixed uniformly. The slurry was coated on a 50-µm PET release film (Loparex Paper Inc., release force 5 g/inch) by the comma roll coating method, to obtain samples F-K. The gap distance was controlled at 200 µm, 300 µm or 400 µm. After coating, the sample was kept in a 60° oven for 5 min, and then kept in a 105° oven for 10 min, for crosslinking. The 3M MPF WH-J or ES 6020 PVDF film was attached to the sample obtained, and the composite material layer was transferred to the porous layer (at a hot pressing temperature of 65 °C) with a hot pressing roller through heat sticking, thereby forming an adhesive tape sample to be tested.

A 1-inch wide and about 8-inch long sample strip was obtained by cutting carefully with a cutting knife. After the release film was removed, the adhesive tape was adhered to a stainless steel (SS) (commercially available from Chemsultants International Corporation, Ohio, USA) plate. It was rolled with a 2-kg rubber roller back and forth once at a speed of 12 inch/min, then stored for a specific period of time, and measured for the force required to peel off the adhesive tape at an angle of 180°, at a peeling speed of 12 inch/min, wherein the machine used in the test was Instron 3343 (commercially available from Chemsultants International Corporation, Ohio, USA), and the measured values were given in N/cm. Measurements of three adhesive tape samples were averaged. Before the test, the plate with the sample strip of the adhesive tape attached thereon was stored at the condition as follows: 23 °C +/-2 / 50+/-5% RH, 1 day. Results obtained are summarized in Table 4.

### Embodiment 5. High-Temperature Shear Strength Test

The tape sample to be tested which was prepared in Embodiment 4 was taken and a cutter knife was used to carefully cut out a sample strip with a width of 1 inch and a length of about 6 inches. After the release film was removed, the adhesive tape was adhered to a stainless steel (SS) substrate, and cut to leave a 1 inch x 1 inch sample for the shear test at a temperature of 70°C. It was rolled with a 2-kg rubber roller back and forth once at a speed of 12 inch/min, and then stored for 1 day at room temperature. The test was performed by loading a 1000-g load to the adhesive tape sample. Each sample was suspended until failure occurs or the experiment terminates. The time to failure (in min) and the failure mode were recorded, and if it exceeded 5000 min, it was recorded as 5000 min. Measurements of three adhesive tape samples were averaged. Results obtained are summarized in Table 4.

**Table 4. Test results of peeling adhesion force and high-temperature shear strength**

| Code | Light scattering porous film material | Coating slit distance (µm) | Particle size of wax powder (mesh) | Peeling adhesion force (N/mm) | High-temperature shear strength (min) |
|---|---|---|---|---|---|
| F | PP OCF | 400 | 100 | 0.240, cohesion | >5000, cohesion |
| G | PP OCF | 400 | 60 | 0.056, cohesion | >5000, cohesion |
| H | PP OCF | 200 | 100 | 0.098, cohesion | >5000, cohesion |
| I | PP OCF | 300 | 60 | 0.068, cohesion | >5000, cohesion |
| J | PP OCF | 300 | 100 | 0.172, cohesion | >5000, cohesion |
| K | PVDF | 300 | 100 | 0.168, cohesion | >5000, cohesion |

It is clear from the results shown in Table 4 that the particle size of the wax and the coating slit distance of the coating had little impact on the high temperature shear strength testing. The use of a smaller particle size of wax and a greater coating slit distance can achieve a greater peeling force. The use of different light scattering film materials has little impact on the peeling force and high-temperature shear test.

### Embodiment 6. Manufacturing And Testing Of UV-Aged Sample

The M80 wax powder was screened through a 100-mesh sieve, so as to separate out wax powder particles below 100 meshes. The weighed 3020 (100 parts), RD1054 (0.12 part), M80 (50 parts) and a red pigment (4 parts) were added into a plastic bottle, diluted with ethyl acetate to a 30 wt% slurry, mixed for half an hour on a three-roll machine, then placed into a planetary mixer and mixed uniformly. The slurry was coated on a 50-µm PET release film (Loparex Paper Inc., release force 5 g/inch) by the comma roll coating method. The gap distance was controlled at 300 µm. After coating, the sample was kept in a 60° oven for 5 min, and then kept in a 105° oven for 10 min for crosslinking. The obtained sample was combined with the 3M MPF WH-J or ES6020 PVDF film, and pressed with a hot pressing roller into a film sample (at a hot pressing temperature of 65°C).

The sample obtained was tested with a QUV accelerated aging tester. The UV power was 0.87 W/m², and the test temperature was 63 °C. During the test, the outer surface of the light scattering film was facing the ultraviolet lamp. Experimental results showed that none of the samples had a significant change after 500 h of continuous illumination. And within half an hour below 80 °C, the sample still had color development. The color development was not significantly different from samples without ultraviolet irradiation.

Although for the purpose of illustration the above noted embodiments include many specific descriptions, a person skilled in the art should understand that many variations, modification, replacements and changes shall each fall into the scope requested to be protected by the Claims of the present disclosure. Therefore, the contents of the disclosure described in the embodiments are not intended to impose any limitations on the disclosure protected by the Claims. The suitable scope of the present disclosure shall be specified by the Claims below and suitable legal equivalents thereof. All the cited literatures have each been incorporated into the present text through full text citation.

## Claims

1. A temperature-indicating composite material product, comprising:
a porous film, opaque to at least a portion of visible light, or opaque to at least a portion of visible light and at least a portion of ultraviolet light;
a colored composite material layer located at a lower surface of the porous film, the colored composite material layer comprising:
a macro-molecular connecting material;
a crystalline material; and
a colorant, wherein
the crystalline material and the colorant are dispersed in the macro-molecular connecting material, the macro-molecular connecting material is an amorphous material or has a melting point higher than that of the crystalline material, and when the crystalline material is heated to melt into a liquid, the macro-molecular connecting material and the crystalline material are phase-separated so that when heated to melt into a liquid, the crystalline material can migrate into the porous film, and fill a plurality of pores therein, making the porous film transparent to visible light.

2. The temperature-indicating composite material product according to claim 1, wherein the macro-molecular connecting material comprises a macro-molecular pressure-sensitive adhesive material.

3. The temperature-indicating composite material product according to claim 1, wherein the porous film has a pore size equivalent to the wavelength of the visible light and ultraviolet light.

4. The temperature-indicating composite material product according to claim 1, wherein the thickness of the porous film ranges from 1 µm to 500 µm.

5. The temperature-indicating composite material product according to claim 1, wherein the porous film comprises a hydrophobic polymer material, and optionally a UV-absorber or a UV-stabilizer.

6. The temperature-indicating composite material product according to claim 5, wherein the hydrophobic polymer material comprises polyolefin, polystyrene, polyacrylate, nylon, fluorocarbon polymers or polyethersulfone, or includes at least one of copolymerized polymers of the above polymers.

7. The temperature-indicating composite material product according to claim 1, wherein the thickness of the colored composite material layer ranges from 1 µm to 500 µm.

8. The temperature-indicating composite material product according to claim 1, wherein the crystalline material has a refractive index close to that of the solid material constituting the porous film.

9. The temperature-indicating composite material product according to claim 8, wherein the crystalline material comprises natural wax or synthetic wax.

10. The temperature-indicating composite material product according to claim 9, wherein the crystalline material comprises stearic acid, lauric acid, linear polyethylene, docosanoic acid, stearone, carnauba wax, microcrystalline wax, paraffin, polyethylene wax, candlelight wax, lignite wax, Fischer-Tropsch synthetic wax, bisamide wax, amide wax, hydrogenated castor oil, synthetic ester wax, oxidized polyethylene wax, oleamide, stearamide, lauramide, erucyl amide, glycerol ester, chlorinated wax, or carbamate modified wax.

11. The temperature-indicating composite material product according to claim 2, wherein the pressure-sensitive adhesive material comprises at least one of polyacrylate, silica gel, polyurethane, polyester, polyolefin, ethylene-vinylacetate, polybutyronitrile, styrene block polymer, and rubber pressure-sensitive adhesive, and has no group that can react with the crystalline material.

12. The temperature-indicating composite material product according to claim 2, wherein the mass of the crystalline material ranges from 1 to 300 parts, based on 100 parts by mass of the pressure-sensitive adhesive material.

13. The temperature-indicating composite material product according to claim 2, wherein the colored composite material layer further comprises a crosslinker selected in accordance with the pressure-sensitive adhesive material and used in an amount ranging from 0.01 to 1 part by mass based on 100 parts by mass of the pressure-sensitive adhesive material.

14. The temperature-indicating composite material product according to claim 2, wherein the colorant is used in an amount ranging from 1 to 20 parts by mass, based on 100 parts by mass of the pressure-sensitive adhesive material.

15. The temperature-indicating composite material product according to claim 1, wherein the colorant is a pigment.

16. The temperature-indicating composite material product according to claim 15, wherein the pigment is an inorganic pigment.

17. The temperature-indicating composite material product according to claim 1, wherein the colored composite material layer further comprises other additives including an antioxidant, a UV-absorber or a UV aging-resistant additive.

18. The temperature-indicating composite material product according to claim 1, further comprising a UV-resistant transparent protective film located at an upper surface of the porous film.

19. The temperature-indicating composite material product according to claim 1, wherein the temperature-indicating composite material product is a thermochromic label or a thermochromic adhesive tape.

20. The temperature-indicating composite material product according to claim 19, wherein an adhesive layer is provided on a surface of the colored composite material layer opposite to the porous film.

21. The temperature-indicating composite material product according to claim 20, wherein a substrate layer is provided on the surface of the colored composite material layer opposite to the porous film, and an adhesive layer is provided on the surface of the substrate layer opposite to the colored composite material layer.

22. A method for manufacturing the temperature-indicating composite material product according to any of claims 1 to 18, the method comprising:
mixing uniformly a slurry containing a macro-molecular connecting material, a crystalline material and a colorant, and then drying, to form a colored composite material layer; and
laminating the obtained colored composite material onto a porous film opaque to at least a portion of visible light, or opaque to at least a portion of visible light and at least a portion of ultraviolet light, wherein
the macro-molecular connecting material is an amorphous material or has a melting point higher than that of the crystalline material, and when the crystalline material is heated to melt into a liquid, the macro-molecular connecting material and the crystalline material are phase-separated so that when heated to melt into a liquid, the crystalline material can migrate into the porous film, and fill a plurality of pores therein, making the porous film transparent to visible light.

23. The method according to claim 22, wherein the colored composite material layer is laminated with the porous film at a temperature lower than the melting point of the crystalline material.

24. Application of the thermochromic label or the thermochromic adhesive tape according to any one of claims 19 to 21 in electric power or original equipment manufacturing, wherein the thermochromic label or the thermochromic adhesive tape is stuck to or wound on a surface of an object measured.

25. The application according to claim 24, wherein the object measured comprises a cable connector and clamp.
